# EUROPEAN PATENT APPLICATION

(11) **EP 4 152 061 A1**
(43) Date of publication of application: **22.03.2023**
(21) Application number: 21804537.5
(22) Date of filing: 30.04.2021
(51) Int. Cl.: G02B 6/25

(54) **DETERIORATION ESTIMATION METHOD AND DETERIORATION ESTIMATION SYSTEM**

(30) Priority: 12.05.2020 JP 2020083815
(71) Applicant: Sumitomo Electric Optifrontier Co., Ltd., Yokohama-shi Kanagawa 244-8589 (JP)
(72) Inventor: SUZUKI, Takahiro, Yokohama-shi, Kanagawa 244-8589 (JP); OHNISHI, Takaharu, Yokohama-shi, Kanagawa 244-8589 (JP); YUSA, Hideaki, Yokohama-shi, Kanagawa 244-8589 (JP); OOKI, Kazuyoshi, Yokohama-shi, Kanagawa 244-8589 (JP)
(74) Representative: Boult Wade Tennant LLP
(86) International application number: PCT/JP2021/017288
(87) International publication number: WO 2021/230115

(57) **Abstract**

A deterioration estimation method according to one embodiment is a deterioration estimation method for estimating deterioration of a blade of an optical fiber cutter that cuts an optical fiber. The deterioration estimation method includes a process of determining a state of an end face of the optical fiber cut by the blade and a process of estimating from a determination result for the end face whether or not the blade is deteriorated.

## Description

### Technical Field

The present disclosure relates to a deterioration estimation method and a deterioration estimation system.

This application is based upon and claims the benefit of priority from Japanese Patent Application No. 2020-083815, filed on May 12, 2020, the entire contents of which are incorporated herein by reference.

### Background Art

Patent Literature 1 describes an optical fiber cutter. The optical fiber cutter includes a cutter substrate and a cutter lid that is attached to the cutter substrate in an openable/closable manner. A concave holder guide unit for positioning a fiber holder for holding an optical fiber that is a cutting target is formed on a top surface of the cutter substrate. A slider is attached to the holder guide unit, and a blade member for cutting the optical fiber is rotatably supported by the slider. A count display mechanism that counts and displays the number of times of cutting the optical fiber by the blade member is provided to the cutter substrate.

Patent Literature 2 describes an optical fiber cutter including a cutter substrate, a slider movably provided on the cutter substrate, a blade member provided on the slider, and a counting mechanism. The counting mechanism includes a magnet provided on the slider, a magnetic sensor, a control unit, a display unit, and a power supply. The magnetic sensor outputs a detection signal indicating whether or not the magnet is detected to the control unit, and the control unit calculates and stores the number of times of movement of the slider to a cut start position based on a detection result of the magnetic sensor. The number of times of movement of the slider to the cut start position corresponds to the number of times of cutting of the optical fiber by the blade member. The above-mentioned number of times of movement stored in the control unit, that is, the number of times of cutting of the optical fiber is displayed on the display unit.

### Citation List

### Patent Literature

Patent Literature 1: Japanese Unexamined Patent Publication No. 2013-41042
Patent Literature 2: Japanese Unexamined Patent Publication No. 2017-156418

### Summary of Invention

According to one embodiment, there is provided a deterioration estimation method being a deterioration estimation method for estimating deterioration of a blade of an optical fiber cutter that cuts an optical fiber. The deterioration estimation method includes: a process of determining a state of an end face of the optical fiber cut by the blade; and a process of estimating from a determination result for the end face whether or not the blade is deteriorated.

According to one embodiment, there is provided a deterioration estimation system being a deterioration estimation system that estimates deterioration of a blade of an optical fiber cutter that cuts an optical fiber. The deterioration estimation system includes an end face state determination unit that determines a state of an end face of the optical fiber cut by the blade and a deterioration estimation unit that estimates from a determination result by the end face state determination unit whether or not the blade is deteriorated.

### Brief Description of Drawings

FIG. 1 is a perspective view illustrating an optical fiber cutter as an example.
FIG. 2 is a perspective view illustrating a fusion splicing device as an example.
FIG. 3 is a perspective view illustrating a state in which a windshield cover of the fusion splicing device of FIG. 2 is opened.
FIG. 4 is a block diagram illustrating an example of a configuration of a deterioration estimation system according to an embodiment.
FIG. 5 is a diagram illustrating an example of an image of an end face of an imaged optical fiber.
FIG. 6 is a graph illustrating an example of a brightness waveform of a normal optical fiber image.
FIG. 7 is a graph illustrating an example of a brightness waveform of an image of an optical fiber having a chip.
FIG. 8 is a flowchart illustrating an example of a process of a deterioration estimation method according to an embodiment.
FIG. 9 is a diagram schematically illustrating a method of determining a position of a brightness calculation target in a process of determining a state of an end face of an optical fiber in the deterioration estimation method of FIG. 8.

### Description of Embodiments

A deteriorated state such as abrasion of a blade of an optical fiber cutter can usually be estimated from the number of times of cutting by the blade. However, in some cases, the deteriorated state of the blade does not depend only on the number of times of cutting, but may also depend on work environment, a work method, and the like. Therefore, in some cases, when estimating the deteriorated state of the blade from the number of times of cutting, the deteriorated state of the blade cannot be estimated with high accuracy. Therefore, there is room for improvement in terms of the estimation accuracy of the deteriorated state of the blade.

The present disclosure is to provide a deterioration estimation method and a deterioration estimation system capable of estimating the deteriorated state of the blade with high accuracy.

According to the present disclosure, the deteriorated state of the blade can be estimated with high accuracy.

### [Description of Embodiment]

First, embodiments of the present disclosure will be listed and described. A deterioration estimation method according to one embodiment is a deterioration estimation method for estimating deterioration of a blade of an optical fiber cutter that cuts an optical fiber. The deterioration estimation method includes a process of determining a state of an end face of the optical fiber cut by the blade and a process of estimating from a determination result for the end face whether or not the blade is deteriorated.

A deterioration estimation system according to one embodiment is a deterioration estimation system that estimates deterioration of a blade of an optical fiber cutter that cuts an optical fiber. The deterioration estimation system includes an end face state determination unit that determines a state of an end face of the optical fiber cut by the blade of the optical fiber cutter and a deterioration estimation unit that estimates from a determination result by the end face state determination unit whether or not the blade is deteriorated.

In the deterioration estimation method and deterioration estimation system described above, the state of the end face of the optical fiber cut by the blade of the optical fiber cutter is determined, and it is estimated from the determination result whether or not the blade is deteriorated. Since it is estimated from the end face of the cut optical fiber whether or not the blade is deteriorated, the estimation of the deteriorated state of the blade can be performed with high accuracy based on the state of the end face. Since the deteriorated state of the blade is estimated from the determination result for the end face of the optical fiber cut by the blade, it can be estimated with high accuracy whether or not the blade is deteriorated. In the deterioration estimation method and the deterioration estimation system, the deteriorated state of the blade is estimated based on the determination result for the end face of the optical fiber. Therefore, the optical fiber cutter cannot be allowed to have the function of estimating the deteriorated state of the blade. Since the deteriorated state of the blade can be estimated by a device other than the optical fiber cutter, the configuration of the optical fiber cutter can be simplified.

In the process of determining of the deterioration estimation method described above, the end face may be imaged, or the deterioration estimation method may further include a process of calculating the brightness of the image of the imaged end face. In the process of determining, the state of the end face may be determined from the calculated brightness of the image. In this case, it is estimated from the brightness of the image of the optical fiber whether or not the blade is deteriorated. Since the estimation of the deterioration of the blade can be automatically performed from the brightness of the image, the deteriorated state of the blade can be estimated more easily and with high accuracy.

In the process of estimating, it may be estimated based on a result obtained by accumulating the determination result for the end face and analyzing a plurality of determination results for one blade in time-series whether or not the blade is deteriorated. In this case, the plurality of determination results are stored and accumulated for one blade, and the estimation of the deterioration of the blade is performed by analyzing the plurality of determination results in time series. Therefore, it can be estimated with high accuracy from the determination result analyzed in time series whether or not the blade is deteriorated.

In the process of estimating, it may be estimated from a moving average of the plurality of determination results whether or not the blade is deteriorated. In this case, since the estimation of the presence or absence of the deterioration of the blade can be performed based on the moving average of the plurality of determination results, the estimation of the presence or absence of the deterioration of the blade can be performed with higher accuracy.

### [Details of Embodiment]

Specific examples of a deterioration estimation method and a deterioration estimation system according to an embodiment of the present disclosure will be described. In the description of the drawings, the same or corresponding elements are denoted by the same reference numerals, and duplicate description thereof will be omitted as appropriate. For ease of understanding, in some cases, the drawings may be partially simplified or exaggerated, and the dimensional ratios and the like are not limited to those described in the drawings.

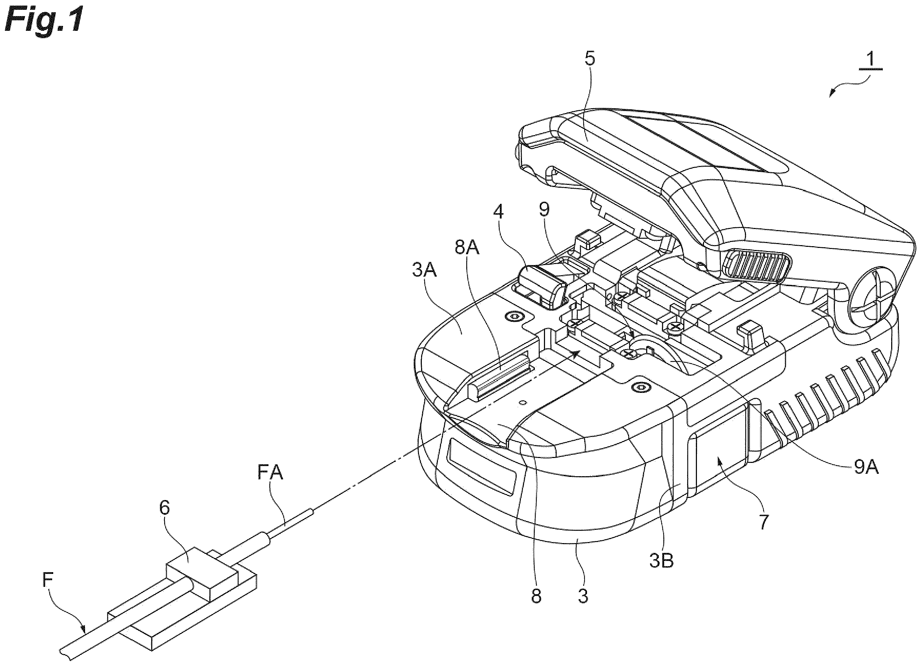

FIG. 1 is a perspective view illustrating an exemplary optical fiber cutter 1 to which a deterioration estimation method and a deterioration estimation system according to the embodiment are applied. The optical fiber cutter 1 is, for example, a device for cutting a glass fiber FA exposed by removing coating on a distal end of an optical fiber F. The optical fiber cutter 1 includes a cutter substrate 3, a cutter lid 5, a slider 7, and a blade portion 9.

The cutter substrate 3 has a holder guide unit 8. The holder guide unit 8 is provided on a top surface 3A of the cutter substrate 3. The holder guide unit 8 defines a position of the optical fiber holder 6 that holds the optical fiber F that is a cutting target. The holder guide unit 8 has, for example, a rectangular concave shape. A claw member 8A is arranged on one side of the holder guide unit 8. The claw member 8A is in a state of being protruded by a biasing force of a spring (not illustrated) when the optical fiber holder 6 is not set in the holder guide unit 8. When the optical fiber holder 6 is set in the holder guide unit 8, the claw member 8A is pressed against the biasing force of the spring to be retracted.

The cutter lid 5 is attached to the cutter substrate 3 in an openable/closable manner. The cutter lid 5 is rotatably connected to, for example, at a rear end of the cutter substrate 3 via a shaft portion (not illustrated) extending in a width direction of the cutter substrate 3. The slider 7 is provided on the rear side of the holder guide unit 8 in the cutter substrate 3. The slider 7 is movable in the width direction of the cutter substrate 3. The slider 7 is exposed on one side surface 3B of the cutter substrate 3. The blade portion 9 has a disk-shaped blade 9A that scratches the glass fiber FA of the optical fiber F. The blade 9A rotates along with the movement of the slider 7, and thus, the set optical fiber F is cut.

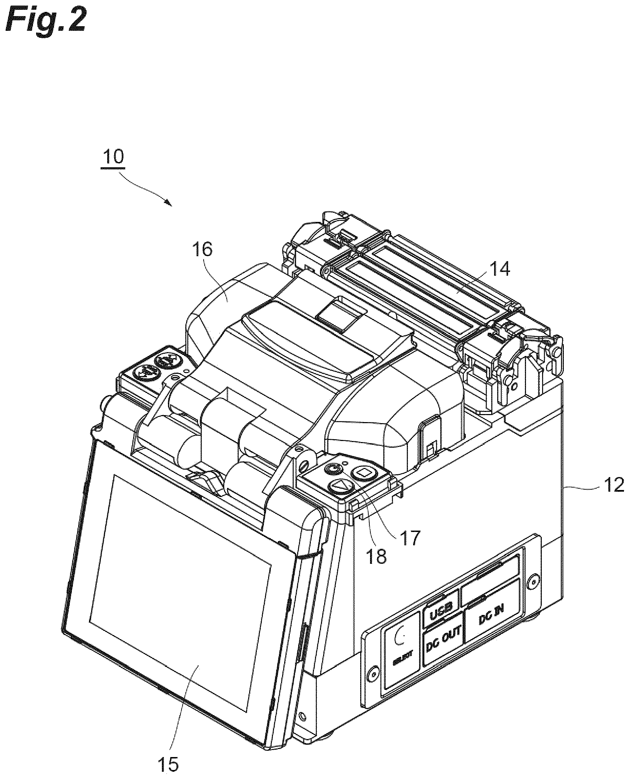

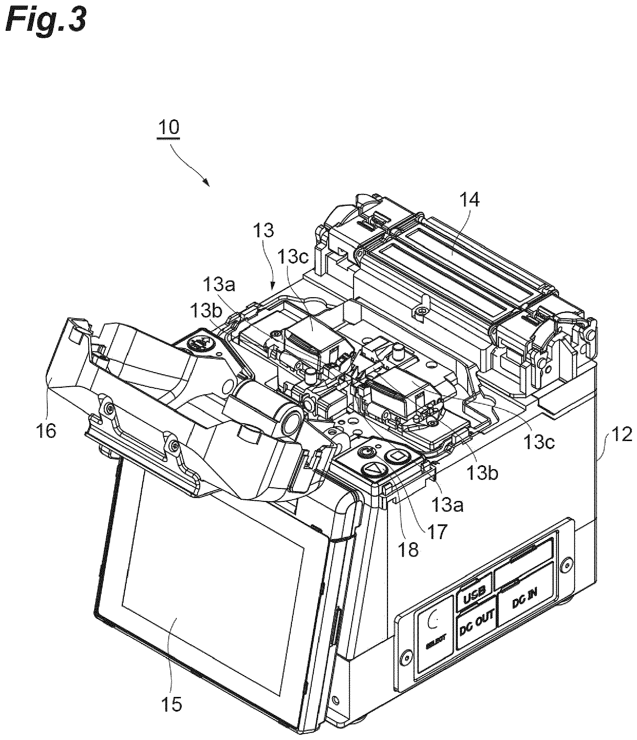

The optical fiber F cut by the optical fiber cutter 1 is fused by, for example, a fusion splicing device 10. FIG. 2 is a perspective view illustrating a fusion splicing device 10 as an example. FIG. 3 is a perspective view illustrating a state in which a windshield cover 16 of the fusion splicing device 10 is opened. The fusion splicing device 10 is a device for fusion splicing various optical fibers to each other, which are not limited to the optical fiber F. The fusion splicing device 10 includes a box-shaped housing 12.

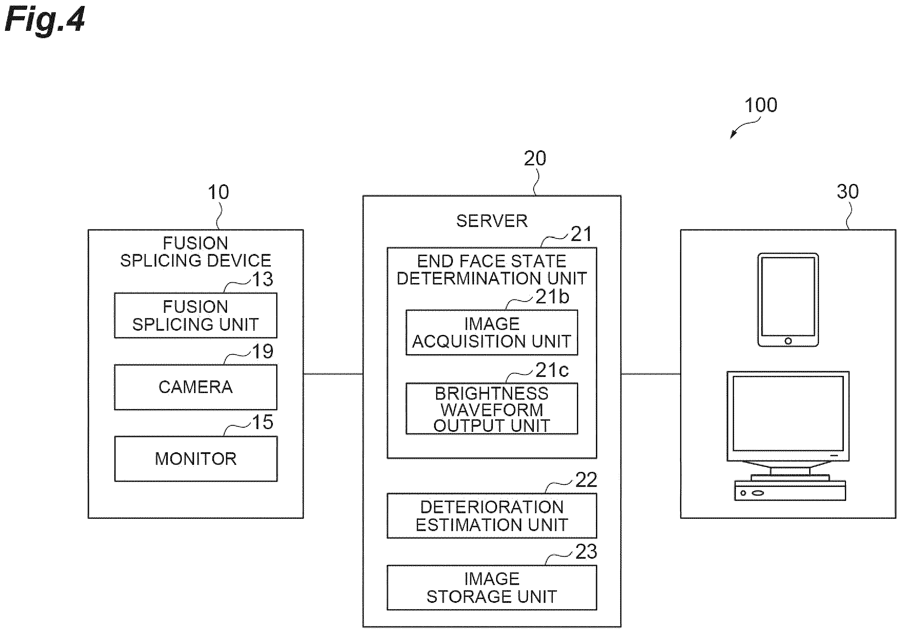

A fusion splicing unit 13 that fuses the optical fibers to each other and a heater 14 that heats and shrinks a fiber reinforcing sleeve over a connecting portion of the optical fibers fused by the fusion splicing unit 13 are provided on the upper portion of the housing 12. The fusion splicing device 10 includes a monitor 15 that displays a state of fusion splicing between the optical fibers imaged by a camera 19 (refer to FIG. 4) arranged inside the housing 12. The fusion splicing device 10 includes the windshield cover 16 that prevents wind from entering the fusion splicing unit 13, a power supply switch 17 that switches power of the fusion splicing device 10 on or off, and a splicing start switch 18 that performs the fusion splicing of the optical fibers.

The fusion splicing unit 13 includes a holder mounting unit on which a pair of optical fiber holders 13c can be mounted, a pair of fiber positioning units 13a, and a pair of electrode rods 13b for discharging. Each of the optical fibers that are fusion targets is held in the optical fiber holder 13c. Each optical fiber holder 13c is mounted and fixed on the holder mounting unit. The fiber positioning unit 13a is arranged between the optical fiber holders 13c and positions the distal end of the optical fiber fixed to each optical fiber holder 13c. The pair of electrode rods 13b are arranged between the fiber positioning units 13a. The electrode rods 13b is the electrodes for fusing the distal ends of optical fibers to each other by arc discharge.

The windshield cover 16 is connected to the housing 12 so as to cover the fusion splicing unit 13 in an openable/closable manner. The power supply switch 17 is a push button for switching on or off the power supply of the fusion splicing device 10 according to the operation of the fusion splicing device 10 by a user. The splicing start switch 18 is a push button for starting an operation of fusing the optical fibers according to an operation of the user.

FIG. 4 is a functional block diagram illustrating a configuration as an example of the deterioration estimation system 100 that estimates deterioration of the blade 9A of the optical fiber cutter 1. As illustrated in FIG. 4, the deterioration estimation system 100 includes the above-mentioned fusion splicing device 10, a server 20, and an information terminal 30. The fusion splicing device 10 is configured to be communicable with the server 20 and the information terminal 30 by, for example, wireless communication.

The information terminal 30 is, for example, a terminal owned by a manager of a construction project using the fusion splicing device 10. The information terminal 30 may be a mobile terminal such as a smartphone or a tablet or may be a fixed terminal such as a personal computer. The server 20 is, for example, a management server or a data processing server that presides over a plurality of construction projects. The server 20 is, for example, a computer capable of communicating with the fusion splicing device 10 and the information terminal 30 via an information communication network such as the Internet. The fusion splicing device 10 and the information terminal 30 exist, for example, at a location different from that of the server 20.

The fusion splicing device 10 may include a computer including hardware such as a CPU, a RAM, a ROM, an input device, a wireless communication module, an auxiliary storage device, and an output device. By allowing these components to operate by the program or the like, each function of the fusion splicing device 10 is realized. The fusion splicing device 10 includes the fusion splicing unit 13, the monitor 15, and the camera 19 described above. The camera 19 is arranged inside the housing 12. The camera 19 acquires a side surface observation image including each of the end faces of the optical fibers in the state where the two optical fibers that are splicing targets are arranged opposed to each other and generates image data. It is noted that, in the present disclosure, the "end face" of the optical fiber includes not only the end face itself but also a certain region of the optical fiber including the end face.

The server 20 is configured to include the computer provided with hardware such as the CPU, the RAM, the ROM, the communication module, and the auxiliary storage device. By allowing these components to operate by the program or the like, each function of the server 20 is realized. Functionally, the server 20 includes an end face state determination unit 21 that determines the state of the end face of the optical fiber, a deterioration estimation unit 22 that estimates the deterioration of the blade 9A of the optical fiber cutter 1, and an image storage unit 23 that stores the image of the end face of the optical fiber.

Hereinafter, an example where the server 20 includes the end face state determination unit 21, the deterioration estimation unit 22, and the image storage unit 23 will be described. However, instead of the end face state determination unit 21, deterioration estimation unit 22, and image storage unit 23 of the server 20, the fusion splicing device 10 may include the end face state determination unit, the deterioration estimation unit, and the image storage unit. A device (for example, an observation device or an inspection device for observing an end face F1 of an optical fiber F) other than the fusion splicing device 10 and the server 20 may include an end face state determination unit, a deterioration estimation unit, and an image storage unit. Alternatively, a portion of each of the end face state determination unit 21, the deterioration estimation unit 22, and the image storage unit 23 may be provided separately in a plurality of devices.

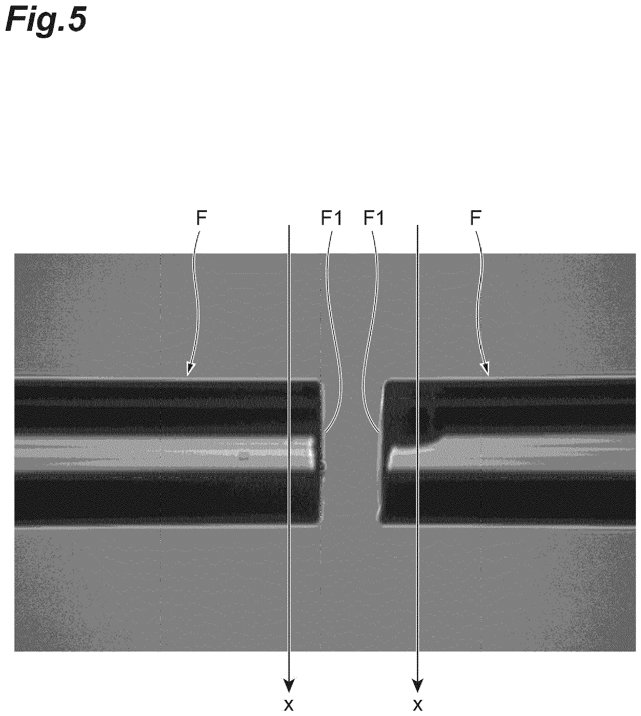

The end face state determination unit 21 has an image acquisition unit 21b that acquires the side surface observation image of the end face of the optical fiber imaged by the camera 19 and a brightness waveform output unit 21c that outputs the brightness waveform of the image of the end face of the optical fiber acquired by the image acquisition unit 21b. FIG. 5 illustrates an example of an image of a pair of the optical fibers F imaged by the camera 19 of the fusion splicing device 10 and acquired by the image acquisition unit 21b. FIG. 5 illustrates an example where defects (chips) occur in one (right side) optical fiber F among the pair of optical fibers F.

The defects of the optical fiber F indicate, for example, defects of the end face F1 of the optical fiber F cut by the optical fiber cutter 1. The defects of the optical fiber F include defects caused by the deterioration of the blade 9A and defects not caused by the deterioration of the blade 9A. The defects caused by the deterioration of the blade 9A indicate the state of the end face F1 which is not cut as appropriate (for example, in a flattened shape) by the blade 9A due to, for example, aged deterioration of the blade 9A or abrasion of the blade 9A. The defects not caused by the deterioration of the blade 9A indicate, for example, the state of the end face F1 which is not cut as appropriate as the result of being cut in the state where the positioning is not performed as appropriate by the fiber positioning unit 13a.

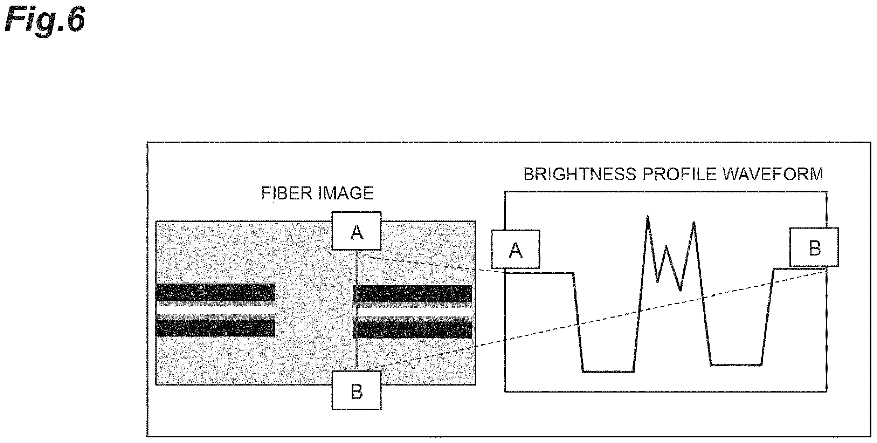

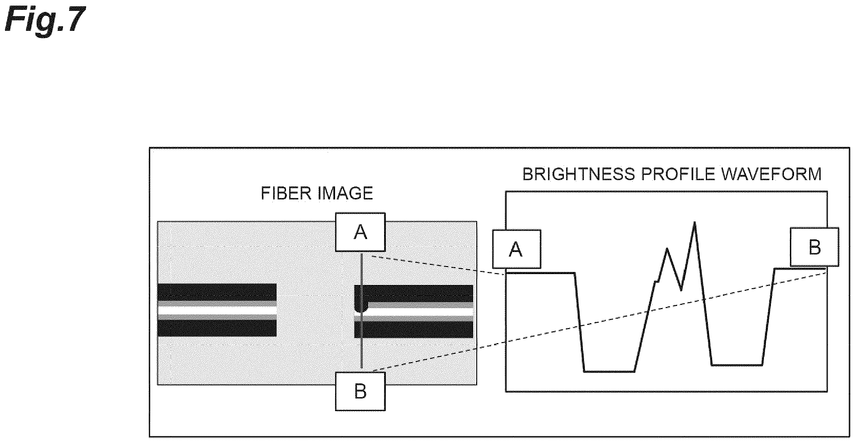

The brightness waveform output unit 21c outputs a brightness waveform of the image from the side surface observation image of the pair of optical fibers F. FIG. 6 illustrates an example (brightness profile waveform) of the brightness waveform output by the brightness waveform output unit 21c from the side surface observation image of the end face F1 of the optical fiber F in which no defects occur. FIG. 7 illustrates an example of the brightness waveform output by the brightness waveform output unit 21c from the side surface observation image of the end face F1 of the optical fiber F in which defects occur. As illustrated in FIGS. 5 to 7, the brightness waveform output unit 21c calculates, for example, a relationship between an x axis extending in a direction intersecting (for example, perpendicular to) the optical fiber F and brightness. However, the brightness waveform output unit 21c may calculate a relationship between an axis extending in a longitudinal direction of the optical fiber F and the brightness.

As illustrated in FIGS. 5 and 6, in an example of the optical fiber F in which no defects occur, when a displacement x reaches the optical fiber F from 0, the blackness increases and the brightness decreases, and when the displacement reaches a core of the optical fiber F, the light becomes white and the brightness improves. In the example of the optical fiber F in which no defects occur, a mountain portion having high brightness in the vicinity of the center interposed between portions having low brightness appears in the brightness waveform. As an example, three peak portions (maximum portions in brightness) configured with the highest peak portion in the vicinity of the center and the slightly lower peak portions on both sides thereof are observed in the vicinity of the mountain portion. As illustrated in FIGS. 5 and 7, in the example of the optical fiber F in which defects occur, when the displacement x reaches the optical fiber F from 0, the blackness increases and the brightness decreases, but when the displacement reaches the core of the optical fiber F, with respect to the mountain portion, only two peak portions (maximum portions in brightness) appear in the brightness waveform at the peak. Therefore, in the example of FIG. 7, it can be seen that the end face F 1 of the optical fiber F has defects. It is noted that, by outputting the brightness waveform as described above, the brightness waveform output unit 21c can measure not only the state of the core of the optical fiber F but also the state of the clad and the like, the brightness waveform output unit 21c can measure the state in the vicinity of the end face F 1 of the optical fiber F (a certain region including the end face F 1).

The deterioration estimation unit 22 accumulates, for example, the determination result for the state of the end face transmitted from the fusion splicing device 10 to the server 20 or the determination result for the state of the end face performed by the server 20 in association with a specific blade (herein, the blade 9A) of the used optical fiber cutter. The deterioration estimation unit 22 also analyzes a date and time of cutting the optical fiber, a date and time of observing the cut optical fiber, the number of times of cutting the optical fiber, or the like and the determination result for the state of the end face. The deterioration estimation unit 22 analyzes, for example, a rate of good end faces (referred to as an "end face goodness rate") by obtaining a moving average for a specific period (for example, every day) or for each specific number of times of cutting (for example, every 50 times in the past). For example, the deterioration estimation unit 22 estimates that the blade 9A is deteriorated when the moving average of the end face goodness rate drops below a certain value. In this manner, the deterioration estimation unit 22 estimates the deteriorated state of the blade 9A from a result obtained by accumulating and analyzing the determination result for the end face F1 of the cut optical fiber F over time.

The deterioration estimation unit 22 may estimate from the brightness waveform output by the brightness waveform output unit 21c whether or not the blade 9A is deteriorated. As an example, the deterioration estimation unit 22 may estimate the presence or absence of the deterioration of the blade 9A by comparing the brightness of the end face F1 output by the brightness waveform output unit 21c with the brightness of the end face F1 stored in the image storage unit 23. For example, when the brightness of the end face F1 output by the brightness waveform output unit 21c matches the brightness of the image of the normal end face F1 stored in the image storage unit 23, the deterioration estimation unit 22 may estimate that the blade 9A is not deteriorated.

The image storage unit 23 stores the image of the end face F1 of the optical fiber F acquired by the image acquisition unit 21b. The image stored in the image storage unit 23 includes, for example, an image of the end face F1 having defects not caused by the deterioration of the blade 9A. The deterioration estimation unit 22 determines whether or not the captured image of the end face F1 matches the image of the end face F1 having defects not caused by the deterioration of the blade 9A stored in the image storage unit 23.

When the deterioration estimation unit 22 determines that the captured image of the end face F1 matches the image of the end face F1 having the defects not caused by the deterioration of the blade 9A, the deterioration estimation unit 22 may estimate that the blade 9A is not deteriorated. The deterioration estimation unit 22 estimates from the state of the end face F1 measured by the end face state determination unit 21 whether or not the blade 9A is deteriorated, and for example, the deterioration estimation unit 22 may perform the estimation of the deterioration of the blade 9A as compared with the image of the end face F1 imaged by the camera 19 and the image stored in the image storage unit 23. The camera 19 may image the state of the end face F1 while rotating the optical fiber F. For example, the camera 19 images the optical fiber F from the plurality of directions. The camera 19 may image the optical fiber F the plurality of times from the plurality of distances different from each other.

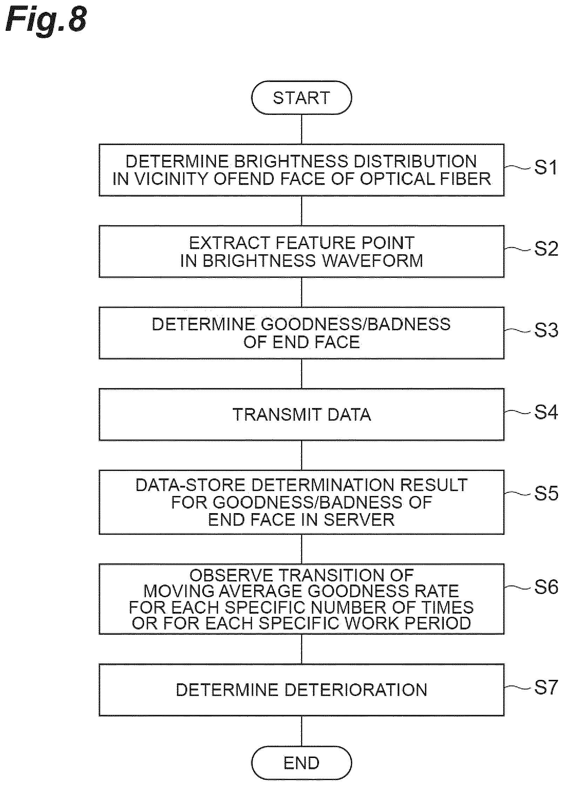

Next, the deterioration estimation method for the blade 9A according to the present embodiment will be described with reference to the flowchart illustrated in FIG. 8. FIG. 8 is the flowchart illustrating the example of the process of the deterioration estimation method according to the present embodiment. First, the optical fiber F cut by the blade 9A of the optical fiber cutter 1 is held by the optical fiber holder 13c of the fusion splicing device 10, and the side surface observation image of the end face F1 of the optical fiber F is captured by the camera 19 (step S1).

The fusion splicing device 10 extracts a feature value at a predetermined feature portion from the image (brightness distribution data) of the end face F1 of the optical fiber F imaged by the camera 19. Then, based on a threshold value for a preset feature value, the end face state determination unit 21 determines the state of the end face F1 of the optical fiber F (a process of determining the state of the end face of the optical fiber and a process of calculating the brightness; step S1 and step S2).

As a specific example, the end face state determination unit 21 searches for the outer diameter position of the optical fiber F from the image acquired by the image acquisition unit 21b and calculates a core outer diameter of the optical fiber F in the vicinity of the center of the outer diameter position. For example, the "core outer diameter" can be set as a distance range having a value equal to or higher than predetermined brightness in the vicinity of the center of the outer diameter position. The "core outer diameter" corresponds to, for example, a width of the central portion of the optical fiber F which is white in the side surface observation image of the optical fiber F illustrated in FIG. 5. In addition to this, an outer diameter of the fiber, a ratio of the outer diameter of the core to the outer diameter of the fiber, brightness of the core center position, a difference in average brightness between a clad portion and a core portion, the average brightness of the peak portion in the vicinity of the center portion, the number of maximum values, the number of minimum values, or the like is exemplified as feature points.

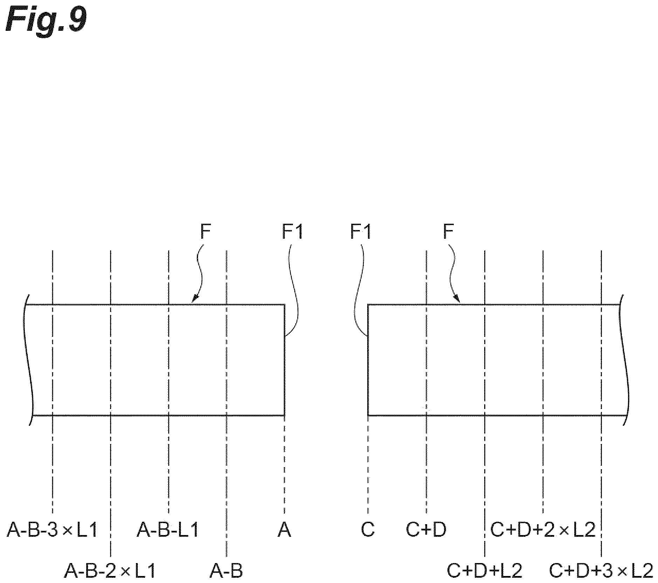

Further, as illustrated in FIG. 9, the calculation of the core outer diameter is performed, for example, at the plurality of locations in the longitudinal direction of the optical fiber F. Specifically, assuming that the coordinate in the longitudinal direction of the optical fiber F of one end face F1 of the pair of optical fibers F are denoted by A, the core outer diameters at four locations of a coordinate A-B, a coordinate A-B-L1, a coordinate A-B-2×L1, and a coordinate A-B-3×L1 are calculated. The above B indicates an inspection interval of the position in the longitudinal direction, and the above L1 indicates a pitch from the inspection interval of the end face. For example, the values of B and L1 are 5 µm, but the values can be changed as appropriate.

Assuming that the coordinate in the longitudinal direction of the optical fiber F of the other end face F 1 of the pair of optical fibers F is noted by C, the core outer diameters of four points of a coordinate C+D, a coordinate C+D+L2, a coordinate C+D+2×L2, and a coordinate C+D+3×L2 are calculated. Similarly to B and L1 described above, the above D indicates an inspection interval in the longitudinal position, and the above L2 indicates a pitch from the inspection interval of the end face. For example, the values of D and L2 are 5 µm, but the values can be changed as appropriate.

After the core outer diameter of the optical fiber F is calculated at the plurality of locations (for example, eight locations) in the longitudinal direction as described above, the end face state determination unit 21 determines whether or not each calculated core outer diameter is within a specified range (step S3). As a specific example, the end face state determination unit 21 determines whether or not each of the calculated eight core outer diameters is within the specified range. When all the calculated core outer diameters are within the specified range, the end face state determination unit 21 determines that the end face is good, and when any of the core outer diameters is not within the specified range, the end face state determination unit 21 determines that the end face is not good. When a certain number or more among the plurality of calculated core outer diameters is within the specified range, the end face state determination unit 21 determines that the end face is good, and when a certain number or more among the plurality of calculated core outer diameters is not within the specified range, the end face state determination unit 21 determines that the end face is not good. In this manner, the end face state determination unit 21 determines whether or not the end face is good (process of determining).

After performing the above determining, for example, the determination result is transmitted to the server 20 directly or via the information terminal 30, and the determination result is displayed on at least one of the fusion splicing device 10 and the information terminal 30. At this time, it is preferable that, along with the determination result, related information such as an observation date and time, a location (position information), a used fusion splicing device 10, information (ID number) specifying a used optical fiber cutter 1 or a used blade 9A, and information (name and ID number) for identifying a worker is transmitted to the server 20.

The end face state determination unit 21 may be provided in the fusion splicing device 10 or may be provided in the server 20. For example, the fusion splicing device 10 transmits the image (brightness distribution data) including the vicinity of the end face F1 of the optical fiber F imaged by the camera 19 to the server 20 directly or via the information terminal 30. Then, the end face state determination unit 21 in the server 20 extracts the feature points from the image (brightness distribution data) and determines the state of the end face F1 of the optical fiber F. After that, the determination result may be transmitted to the fusion splicing device 10 directly or via the information terminal 30, and the determination result may be displayed on any one of the fusion splicing device 10 and the information terminal 30.

Next, the functions and effects obtained from the deterioration estimation method and the deterioration estimation system 100 according to the present embodiment will be described. In the deterioration estimation method and deterioration estimation system 100 according to the present embodiment, goodness/badness determination results for the end face F 1 of the optical fiber F cut by the blade 9A of the optical fiber cutter 1 are accumulated and analyzed over time, and it is estimated based on the results whether or not the blade 9A is deteriorated. Therefore, it can be estimated with high accuracy from the end face F 1 of the cut optical fiber F whether or not the blade 9A is deteriorated.

For example, the determination result for the state of the end face transmitted from the fusion splicing device 10 to the server 20 or the determination result for the state of the end face performed by the server 20 is accumulated (stored) in association with a specific blade (herein, the blade 9A) of the used optical fiber cutter (step S5). For example, with a date and time of cutting the optical fiber, or a date and time of observing the cut optical fiber, analyzing is performed. For example, a rate of good end faces (referred to as an "end face goodness rate") is observed by obtaining the moving average for a specific period (for example, every day) or for each specific number of times of cutting (for example, every 50 times in the past) (step S6). For example, when the moving average of the end face goodness rate drops below a certain value, it is estimated (determined) that the blade 9A is deteriorated (step S7). By estimating the deteriorated state of the blade 9A from the result obtained by accumulating and analyzing the determination result for the end face F1 of the optical fiber F cut in this manner over time, it can be estimated with high accuracy whether or not the blade 9A is deteriorated. Further, in the deterioration estimation method and the deterioration estimation system 100, since the deteriorated state of the blade 9A is estimated by the measurement of the optical fiber F, the optical fiber cutter 1 may be allowed not to have the function of estimating the deteriorated state of the blade 9A. That is, since the deteriorated state of the blade 9A can be estimated by the device other than the optical fiber cutter 1, the configuration of the optical fiber cutter 1 can be simplified.

As described above, in the process of determining the end face F1 of the optical fiber F, a process of imaging the end face F1 of the optical fiber F and calculating the brightness of the image of the imaged end face F1 may be further provided. In the process of determining, the state of the end face of the optical fiber F may be determined from the calculated brightness of the image. In this case, it is estimated from the brightness of the image of the optical fiber F whether or not the blade 9A is deteriorated. Therefore, the estimation of the deterioration of the blade 9A can be performed from the brightness of the image more easily and with high accuracy.

As described above, in the process of estimating, it may be estimated based on a result obtained by accumulating the determination results for the end face F1 and analyzing the plurality of determination results for one blade 9A in time series whether or not the blade 9A is deteriorated. In this case, the determination results for the plurality of end faces F1 are stored and accumulated for one blade 9A, and thus, the estimation of the deterioration of the blade 9A is performed by analyzing the plurality of determination results in time series. Therefore, it can be estimated from the determination results accumulated in time series whether or not the blade 9A is deteriorated.

As described above, in the process of estimating, it may be estimated from the moving average of the plurality of determination results whether or not the blade 9A is deteriorated. In this case, since the presence or absence of the deterioration of the blade 9A can be estimated based on the moving average of the plurality of determination results, the presence or absence of the deterioration of the blade 9A can be estimated with higher accuracy.

Further, the deterioration estimation method may include the image storage unit 23 that stores the side surface observation image of the end face F1 of the optical fiber F. The side surface observation image of the end face F1 may include the side surface observation image of the end face F1 having the defects caused by the deterioration of the blade 9A and the side surface observation image of the end face F1 having the defects not caused by the deterioration of the blade 9A. In the process of determining the state of the end face, when the side surface observation image of the imaged end face F1 matches with the image having the defects not caused by the deterioration of the blade 9A in terms of the feature point, it may be estimated that the blade 9A is not deteriorated. In this case, when the side surface observation image of the imaged end face F1 matches with the side surface observation image of the end face F1 having the defects not caused by the deterioration of the blade 9A, it is estimated that the blade 9A is not deteriorated. Therefore, when the side surface observation image of the imaged end face F 1 has defects and the defects are not caused by the defects of the blade 9A, erroneous determination of the deterioration of the blade 9A can be avoided. Therefore, the estimation of the deterioration of the blade 9A can be performed with higher accuracy.

As described above, the camera 19 may image the state of the end face F 1 while rotating the optical fiber F. In this case, since the optical fiber F is imaged while rotating the optical fiber F along a circumferential direction, the state of the end face F 1 can be measured with higher accuracy. Further, the camera 19 may image the optical fiber F from a plurality of directions. In this case, since the optical fiber F is imaged a plurality of times from a plurality of directions different from each other, the state of the end face F 1 can be measured with higher accuracy.

As described above, the camera 19 may image the optical fiber F a plurality of times from a plurality of distances different from each other. In this case, since the possibility that the optical fiber F cannot be clearly imaged because the camera 19 is out of focus with respect to the optical fiber F can be reduced, the state of the end face F 1 can be measured with high accuracy. Furthermore, as described above, when the core outer diameters of a certain number or more among the calculated plurality of core outer diameters are within a specified range, it may be estimated that the blade 9A is not deteriorated, and when the core outer diameters of a certain number or more among the calculated plurality of core outer diameters are not within a specified range, it may be estimated that the blade 9A is deteriorated. In this case, the deterioration of the blade 9A can be estimated with higher accuracy.

Heretofore, the embodiments of the deterioration estimation method and the deterioration estimation system according to the present disclosure have been described. However, the present invention is not limited to the above-described embodiments. That is, it is easily recognized by those skilled in the art that the present invention can be changed and modified in various forms within the scope of the spirit described in the scope of the claims. For example, the contents and orders of the processes of the deterioration estimation method can be changed as appropriate, and the configurations of the components of the deterioration estimation system can be changed as appropriate.

As described above, the fusion splicing device 10 may include the end face state determination unit, the deterioration estimation unit, and the image storage unit, and the server 20 may include the end face state determination unit 21, the deterioration estimation unit 22, and the image storage unit 23. The information terminal 30 may include the end face state determination unit, the deterioration estimation unit, and the image storage unit. Furthermore, devices (for example, the optical fiber cutter 1) other than the fusion splicing device 10, the server 20, and the information terminal 30 may include the end face state determination unit, the deterioration estimation unit, and the image storage unit. As described above, the device including the end face state determination unit, the deterioration estimation unit, and the image storage unit can be changed as appropriate. Furthermore, for example, the fusion splicing device 10, the server 20, or the information terminal 30 can be omitted.

In the above-described embodiment, the example of measuring the end face F1 of the optical fiber F cut by the blade 9A of the optical fiber cutter 1 has been described. However, shapes, configurations, and arrangements of the components (blade and the like) of the optical fiber cutter are not limited to those of the above-mentioned example of the optical fiber cutter 1, and can be changed as appropriate. That is, the deterioration estimation method and deterioration estimation system according to the present disclosure can be applied to an optical fiber F cut by an optical fiber cutter different from the optical fiber cutter 1.

In the above-described embodiment, the example where the end face F1 of the optical fiber F is imaged and the end face F1 is determined by using the brightness of the image of the end face F1 has been described. However, in the determination of the state of the end face F 1, the end face F1 may be determined by using information other than the brightness. Further, the end face F1 may be measured by a method other than the imaging of the end face F1. For example, the state of the end face F1 may be measured by performing laser irradiation, light irradiation, or ultrasonic irradiation on the end face F1 of the optical fiber F and detecting a reflected wave from the end face F1.

In the above-described embodiment, the example has been described where the image stored in the image storage unit 23 includes the image of the end face F1 having the defects not caused by the deterioration of the blade 9A and the deterioration estimation unit 22 determines whether or not the captured image of the end face F1 matches with the image of the end face F1 having the defects not caused by the deterioration of the blade 9A. However, the deterioration estimation unit 22 may not determine whether or not the captured image of the end face matches with the image of the end face having the defects not caused by the deterioration of the blade. Even in this case, by using the time-series analysis, the moving average, or the like described above, sudden abnormal values (data of defects not caused by deterioration) can be easily excluded.

### Reference Signs List

1: optical fiber cutter, 3: cutter substrate, 3A: top surface, 3B: one side surface, 5: cutter lid, 6: optical fiber holder, 7: slider, 8: holder guide unit, 8A: claw member, 9: blade portion, 9A: blade, 10: fusion splicing device, 12: housing, 13: fusion splicing unit, 13a: fiber positioning unit, 13b: electrode rod, 13c: optical fiber holder, 14: heater, 15: monitor, 16: windshield cover, 17: power supply switch, 18: splicing start switch, 19: camera, 20: server, 21: end face state determination unit, 21b: image acquisition unit, 21c: brightness waveform output unit, 22: deterioration estimation unit, 23: image storage unit, 30: information terminal, 100: deterioration estimation system, F: optical fiber, F1: end face, FA: glass fiber.

## Claims

1. A deterioration estimation method being a deterioration estimation method for estimating deterioration of a blade of an optical fiber cutter that cuts an optical fiber, comprising:
a process of determining a state of an end face of the optical fiber cut by the blade; and
a process of estimating from a determination result for the end face whether or not the blade is deteriorated.

2. The deterioration estimation method according to claim 1, wherein the process of determining includes:
a process of imaging the end face; and
a process of calculating brightness of an image of the imaged end face, and
wherein, in the process of determining, the state of the end face is determined from the calculated brightness of the image.

3. The deterioration estimation method according to claim 1 or 2,
wherein, in the process of estimating, it is estimated based on a result obtained by accumulating the determination result for the end face and analyzing a plurality of determination results for one blade in time series whether or not the blade is deteriorated.

4. The deterioration estimation method according to claim 3,
wherein, in the process of estimating, it is estimated from a moving average of the plurality of determination results whether or not the blade is deteriorated.

5. A deterioration estimation system being a deterioration estimation system that estimates deterioration of a blade of an optical fiber cutter that cuts an optical fiber, comprising:
an end face state determination unit that determines a state of an end face of the optical fiber cut by the blade; and
a deterioration estimation unit that estimates from a determination result by the end face state determination unit whether or not the blade is deteriorated.
